# EUROPEAN PATENT APPLICATION

(11) **EP 2 846 036 A1**
(43) Date of publication of application: **11.03.2015**
(21) Application number: 14179674.8
(22) Date of filing: 04.08.2014
(51) Int. Cl.: F02P 5/14, F02P 5/155, F02P 5/152, F02D 13/02, F02D 41/00, F01L 1/344

(54) **Engine control mechanism**

(30) Priority: 09.08.2013 JP 2013166898
(71) Applicant: AISIN SEIKI KABUSHIKI KAISHA, Kariya-shi, Aichi-ken 448-8650 (JP)
(72) Inventor: Kaneko, Masaaki, Kariya-shi, Aichi-ken,, 448-8650 (JP)
(74) Representative: Winter, Brandl, Fürniss, Hübner, Röss, Kaiser, Polte - Partnerschaft mbB

(57) **Abstract**

An engine control mechanism includes intake and exhaust valves (11, 10) that opens and closes a combustion chamber (2) of an engine (E) to be driven with gasoline. The engine control mechanism includes: an intake-side VVT (4) including first driving-side and driven-side rotary bodies (41, 42), and capable of setting a valve opening/closing timing of the intake valve such that a relative phase of the first driven-side rotary body is set to an intermediate lock phase at the time of starting of the engine, and the relative phase is set to a more retarded side than the intermediate lock phase after the starting; an exhaust-side VVT (5) including second driving-side and driven-side rotary bodies (51, 52), and setting a valve opening/closing timing of the exhaust valve such that a relative phase of the second driven-side rotary body is set to any phase between the most advanced phase and the most retarded phase; a control unit (6) advance-controlling the ignition timing when an operational state has shifted from an Atkinson cycle state to a transient operational state; and an ignition timing changing mechanism (8) in which the driving is controlled by the control unit.

## Description

### TECHNICAL FIELD

This disclosure relates to an engine control mechanism equipped with an intake-side variable valve timing (VVT) that is capable of setting the valve opening/closing timing of an intake valve such that a relative phase of a driven-side rotary body with respect to a driving-side rotary body is set to an intermediate lock phase between a most advanced phase and a most retarded phase at the time of starting of an engine to be driven with gasoline and the relative phase is changed and set to a more retarded side than the intermediate lock phase after the starting of the engine, and an exhaust-side VVT that sets the valve opening/closing timing of an exhaust valve such that a relative phase of a driven-side rotary body with respect to a driving-side rotary body is set to any phase between the most advanced phase and the most retarded phase.

### BACKGROUND DISCUSSION

In the related art, as this type of engine control mechanism, there is, for example, an engine control mechanism described in Paragraphs [0017] and [0018] of JP 2004-183510A (Reference 1).

In a high expansion-ratio cycle engine having an expansion ratio set to be larger than a compression ratio and including a supercharger, the well-known technique tends to prevent degradation of the response of the supercharger at the time of vehicle start or the like and tends to prevent a decrease of the output at the time of acceleration transition and in a low/middle speed region.

Specifically, if operational state determining means determines that the engine is under the acceleration transition when the engine is operated in the low/middle speed region and at a low load, a control unit controls a variable valve timing mechanism so as to advance the valve opening timing of the exhaust valve. At the time of the vehicle start or the like, this tends to release a portion of combustion energy within a cylinder as exhaust energy before being converted into kinetic energy, enhance the supercharging efficiency of intake air by the supercharger to improve the response of the supercharger, and improve drivability.

However, when the operational state of the engine is in the low/middle speed region and the low load region, the energy of the combustion exhaust gas is not so large. Hence, even if the combustion exhaust gas is supplied to an exhaust turbine of the supercharger with an earlier timing, the rotating speed of the exhaust turbine and an intake turbine does not increase immediately.

Additionally, when it is intended to operate the exhaust-side VVT, since the discharge pressure of an oil pump is low in a state where the engine output is low, a slight delay also occurs in performing the phase conversion control of a VVT.

In this way, in the related art, even if it is intended to increase the engine output from a state where the engine speed is low, the rising of torque takes substantial time, and there is also a limit in enhancing drivability.

Thus, a need exists for an engine control mechanism that can further enhance response in the process in which an engine is accelerated from a low-speed rotation state of an Atkinson cycle.

### SUMMARY

An aspect of this disclosure relates to an engine control mechanism having an intake valve that opens and closes a combustion chamber of an engine to be driven with gasoline so that gasoline and air flow into the combustion chamber, and an exhaust valve that opens and closes the combustion chamber so that a combustion exhaust gas flows out of the combustion chamber. The engine control mechanism includes an intake-side VVT that has a first driving-side rotary body and a first driven-side rotary body, and is capable of setting a valve opening/closing timing of the intake valve such that a relative phase of the first driven-side rotary body with respect to the first driving-side rotary body is set to an intermediate lock phase between a most advanced phase and a most retarded phase at the time of starting of the engine, and the relative phase is set to a more retarded side than the intermediate lock phase after the starting of the engine; an exhaust-side VVT that has a second driving-side rotary body and a second driven-side rotary body, and sets a valve opening/closing timing of the exhaust valve such that a relative phase of the second driven-side rotary body with respect to the second driving-side rotary body to any phase is set to the most advanced phase and the most retarded phase; a control unit that advance-controls the ignition timing of the engine when an operational state of the engine has shifted from an Atkinson cycle state where the phase of the intake-side VVT is closer to the retarded side than the intermediate lock phase to a transient operational state where the output of the engine is increased; and an ignition timing changing mechanism in which the driving is controlled by the control unit.

The Atkinson cycle is available in the engine related to the aspect of this disclosure. While the engine operates in the Atkinson cycle, the valve opening/closing timing of the intake-side VVT is at a timing closer to the retarded side than the related art, that is, at a timing at which the actual compression ratio is lower. If a driver performs the operation of an accelerator from this state in order to increase engine output, the combustion speed becomes slow due to a low actual compression ratio in the control of the related art. As a result, a time loss obtained from the volume and pressure of the combustion chamber when the piston operates with a top dead center interposed therebetween increases, and thermal efficiency degrades. That is, since the output decreases only in the Atkinson cycle with a slow combustion speed, the engine output cannot be derived to the maximum, and a driver feels insufficiency of drivability.

However, shifting can be rapidly made from the Atkinson cycle state to a state with high engine output by including the ignition timing changing mechanism that advance-controls the ignition timing as in the present configuration. That is, in the Atkinson cycle, the valve opening/closing timing of the intake-side VVT is set to be late and the actual compression ratio becomes low. Therefore, the degree of air compression within an engine cylinder is small. For this reason, the combustion speed becomes slow, and the knocking limit of the engine can be extended to the advanced side, and the ignition timing can be set to be closer to the advanced side. As a result, the pressure within the cylinder during combustion increases, the degree of constant volume increases (time loss degradation), and engine torque improves.

The engine control mechanism of the aspect of this disclosure may be configured such that the driving control of the ignition timing changing mechanism by the control unit is performed on the basis of a control map showing the correlation between the degree of the Atkinson cycle state, for example, the actual compression ratio and the advance correction amount of the ignition timing.

While the engine operates in the Atkinson cycle, the combustion speed is in a slow state. For this reason, the knocking limit of the engine changes as compared to that in a usual operational state, and the ignition timing can be made earlier. Meanwhile, it is necessary to make the explosive power of a combustion gas as high as possible at an optimal timing for enhancing the response of the engine. That is, it is necessary to adjust the ignition timing according to the operational state of the engine and obtain maximum output. Therefore, in the present configuration, the relationship between the degree of the Atkinson cycle state, for example, the actual compression ratio, and the advance correction amount of the ignition timing is obtained in advance, and this is made into a control map. Accordingly, an ECU can determine an optimal ignition state from the actual compression ratio computed from an intake-side VVT phase, and can enhance the response of the engine. In the present apparatus, if knocking has occurred in the meantime, the protective function of the engine in which the ignition timing is corrected to the retarded side according to the knocking level is fulfilled by the knocking control of the related art.

The engine control mechanism of the aspect of this disclosure may be configured such that the engine includes a supercharger that increases the amount of intake air using a combustion exhaust gas, and a relative phase of the exhaust-side VVT may be advance-controlled when the operational state of the engine has shifted to the transient operational state.

In order to enhance the response of the engine, the amount of intake air to the cylinder may be increased as well as the ignition timing being advanced within a range where the above-described knocks do not occur. Therefore, in the present configuration, the supercharger using the combustion exhaust gas of the engine is included, and when a driver operates an accelerator in order to increase output, the exhaust-side VVT is advance-controlled. As the exhaust-side VVT is advance-controlled, the exhaust valve operates to be opened during an early stage. Hence, the combustion exhaust gas can be supplied to the supercharger at an earlier timing, and the rotational speed of an exhaust turbine and an intake turbine can be increased to increase the amount of intake air. As a result, the response of the engine is made better.

The engine control mechanism of the aspect of this disclosure may further include a pressure-boosting mechanism that increases the hydraulic oil pressure of at least one of the intake-side VVT and the exhaust-side VVT in the transient operational state.

When the engine speed is low under the Atkinson cycle, the discharge oil pressure of a mechanical oil pump that supplies hydraulic oil to respective parts of the engine also tends to become low. In order to rapidly increase the engine output from such a state with a low engine speed, it is also required to achieve the phase change of a VVT during an early stage. Therefore, the present configuration includes the pressure-boosting mechanism that increases the hydraulic oil pressure of at least one of the intake-side VVT and the exhaust-side VVT. Accordingly, the hydraulic oil can be rapidly supplied to the VVT in response to the accelerator operation of a driver who is going to increase the engine output or the like, the phase change of the VVT can be achieved during an early stage, and the operational state of the engine can be made proper.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an explanatory view showing the configuration of an engine control mechanism related to an embodiment;
Fig. 2 is an explanatory view showing a VVT configuration;
Fig. 3 is a control flowchart related to ignition timing advance correction;
Fig. 4 is a control flowchart related to pressure-boosting correction of hydraulic oil pressure for a VVT;
Fig. 5 is a control flowchart related to advance correction of an exhaust-side VVT;
Fig. 6 is a control flowchart related to another embodiment; and
Fig. 7 is an explanatory view showing change aspects of respective parts at the time of an engine output transient response.

### DETAILED DESCRIPTION

### (Apparatus Configuration)

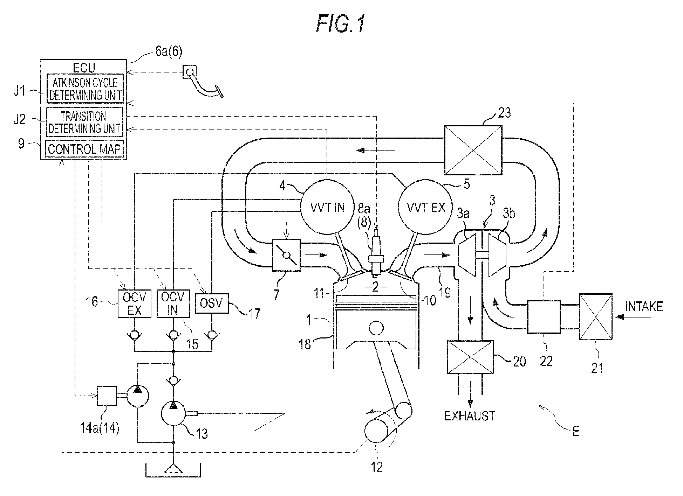

A configuration example of an engine control mechanism related to an embodiment disclosed here is shown in Fig. 1. The engine control mechanism is able to independently change an ignition timing and an intake/exhaust timing with respect to the operation process of a piston 1, and is related to an engine E equipped with a supercharger 3 that increases the amount of intake air to a combustion chamber 2. Moreover, the engine E of the present embodiment includes an intake-side VVT 4 and an exhaust-side VVT 5. Particularly, the intake-side VVT 4 is able to be fixed to an intermediate lock phase at the time of engine starting. Moreover, the intake-side VVT 4 can change the phase of the VVT to a more retarded side in a state where an engine load is low, and can set a valve opening/closing timing to be later. Accordingly, the operation in the Atkinson cycle is possible.

This Atkinson cycle indicates a state where the phase of the intake-side VVT is closer to the retarded side than the intermediate lock phase to be described below, and an expansion ratio of intake air in a cylinder is greater than a compression ratio. Whether or not a cycle is the Atkinson cycle is determined in an Atkinson cycle determining unit J1 provided in an ECU 6a. The engine control mechanism related to the present embodiment, particularly, tends to improve the response of the engine E operated in the Atkinson cycle and tends to enhance drivability.

### (Ignition Timing Changing Mechanism)

The engine E related to the present embodiment is suitably driven with, for example, gasoline. That is, it is preferable that the ignition timing can be changed independently from the vertical motion of the piston 1. For example, a fuel supply mechanism includes a port fuel injection type mechanism or a direct injection type mechanism equipped with an L- or D-jetronic intake air metering system that injects gasoline into the engine E. The ignition timing changing is performed, for example, by the ECU 6a that functions as a control unit 6 that controls the operating states of respective parts of the engine. The ECU 6a forms an electrical signal to be supplied to an ignition plug 8a according to the engine load that can be obtained from an engine speed, the opening degree of an intake throttle 7, or the like. Such an electrical signal can be immediately formed, and can be reflected from a nearest combustion cylinder during operation.

In the present embodiment, when the operational state of the engine E shifts to a transient operational state where the phase of the intake-side VVT 4 is closer to the retarded side than the intermediate lock phase and the output of the engine E is increased from the Atkinson cycle state, the ECU 6a performs advance-control of the ignition timing of the engine E. At this time, a voltage-boosting coil (not shown) that receives an ignition signal from the ECU 6a, an ignition plug 8a that performs ignition on the basis of a boosted voltage, or the like functions as an ignition timing changing mechanism 8.

In addition, whether the operational state of the engine is the above transient operational state is determined in a transition determining unit J2 provided inside the ECU 6a, on the basis of the operation amount of an accelerator, the opening degree of the intake throttle 7, the rotational speed of the engine E, or the like.

The ignition signal from the ECU 6a is performed, for example, on the basis of a control map 9 showing the correlation between the degree of the Atkinson cycle state and the advance correction amount of the ignition timing. Specifically, the crank angle when the ignition plug 8a ignites is set according to a delay phase difference from the intermediate phase in the intake-side VVT 4. In this way, by containing both in the control map, the amount of computation in the ECU 6a during engine control can be reduced, and the ignition timing can be rapidly changed.

The engine response immediately after an accelerator is operated by being stepped on can be enhanced by this ignition timing advance control.

In addition, if the ignition timing is excessively advanced, knocking occurs. In that case, however, knocking control prevents the ignition timing from being excessively advanced.

### (VVT)

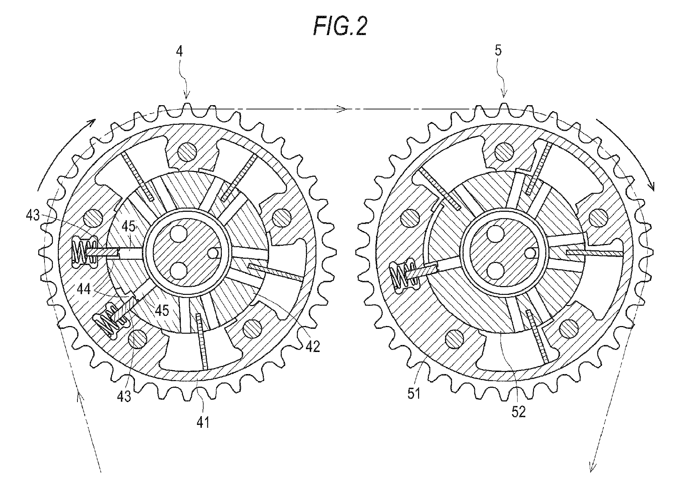

The engine E of the present embodiment includes the intake-side VVT 4 and the exhaust-side VVT 5 as shown in Figs. 1 and 2. The intake-side VVT 4 of these VVTs is able to set a relative phase of a first driven-side rotary body 42 with respect to a first driving-side rotary body 41 to the intermediate lock phase between a most advanced phase and a most retarded phase, with the valve opening/closing timing at the time of engine starting. Additionally, it is possible to change the relative phase to a more retarded side than the intermediate lock phase after the engine starting. An operation in the Atkinson cycle having a large expansion ratio of the combustion chamber 2 is enabled by closing an intake valve 11 late through the cooperation with the exhaust-side VVT 5 to be described below. Accordingly, since it is possible to make the best use of the expansion energy of a combustion exhaust gas while reducing the amount of intake air, an operation with torque is made possible even in low-speed rotation.

On the other hand, the exhaust-side VVT 5 is able to set the relative phase of a second driven-side rotary body 52 with respect to a second driving-side rotary body 51 to any phase between the most advanced phase and the most retarded phase. Accordingly, when the accelerator is stepped on during the operation in the Atkinson cycle intending to increase the output of the engine E, the opening timing of an exhaust valve 10 is advanced. This timing change is also controlled by the ECU 6a. If the opening timing of the exhaust valve 10 is advanced, the exhaust valve 10 begins to be opened before a piston 1 reaches a bottom dead center in the expansion/exhaust stroke of the piston 1. At this time, the intake valve 11 is still in a closed state. As a result, a combustion exhaust gas in an expansion process passes through the exhaust valve 10 with the vigor of the expansion, and flows to an exhaust turbine 3a of the supercharger 3 to be described below. When the piston 1 ascends from the bottom dead center, the atmospheric pressure inside the combustion chamber 2 is brought into a state where the atmospheric pressure has slightly dropped as much as the above combustion exhaust gas that is already exhausted. Hence, the resistance when the piston 1 ascends is small, the ascending speed of the piston 1 is kept fast, and the combustion exhaust gas inside the combustion chamber 2 is vigorously exhausted. This can increase the rotating speeds of the exhaust turbine 3a and an intake turbine 3b, and can increase the amount of intake gas to the combustion chamber 2 to enhance transient response performance.

The intake-side VVT 4 and the exhaust-side VVT 5 are driven by VVT hydraulic oil. In order to supply this hydraulic oil, the engine E includes a mechanical oil pump 13 interlocking with a crankshaft 12 and an electrical oil pump 14a that operates with an arbitrary timing through a command from the ECU 6a.

The intake-side VVT 4 and the exhaust-side VVT 5 include an advance chamber or a retard chamber that supplies and discharges hydraulic oil to and from an intake-side oil control valve (OCV) 15 and an exhaust-side OCV 16 in order to change the phases of the driving-side rotary bodies 41 and 51 and the driven-side rotary bodies 42 and 52, respectively. Additionally, a locking member 43 that performs the engagement and disengagement between a driving-side rotary body and a driven-side rotary body is provided at the intake-side VVT 4 in order to fix a phase to the intermediate lock phase. The locking member 43 is provided, for example, at the first driving-side rotary body 41, and is engaged with or disengaged from a recess 44 formed in the first driven-side rotary body 42 to integrate or separately provide both the rotary bodies. An oil passage 45 is formed at a bottom portion of the recess 44, and the locking member 43 is pushed up and is disengaged from the recess 44 by supplying hydraulic oil to the oil passage 45. The supply and the discharge of the hydraulic oil are performed by an oil switching valve (OSV) 17 connected with the intake-side VVT 4.

### (Supercharger)

The supercharger 3 rotates the exhaust turbine 3a and the intake turbine 3b using a combustion exhaust gas after combustion, and increases the amount of intake air to a cylinder 18. In the present embodiment, the exhaust-side VVT 5 is advance-controlled, and the supply timing of an exhaust gas to the exhaust turbine 3a is advanced, in a stage where the engine E has shifted from the Atkinson cycle state to the transient operational state.

One intake port of the supercharger 3 is provided in a combustion exhaust gas flow passage 19 communicating with the cylinder 18. The combustion exhaust gas rotates the exhaust turbine 3a, and is then released to the atmosphere via a catalyst 20.

The intake turbine 3b is coaxially connected to the exhaust turbine 3a. The air passed through an air filter 21 and an air flow sensor 22 is sucked into the intake turbine 3b, and the air accelerated in the intake turbine is cooled by an intercooler 23, and is supplied to the combustion chamber 2 via the intake throttle 7 and the intake valve 11 after the temperature and volume thereof have decreased.

The operation of the exhaust-side VVT 5 is performed by operating the exhaust-side OCV 16 on the basis of the determination of the transition determining unit of the ECU 6a and the Atkinson cycle determining unit.

In addition, when supercharging pressure tends to rise excessively, the intake air compressed by operating a wastegate (not shown) provided to be attached to the supercharger 3 is again bypassed to the supercharger 3 and decompressed.

Such supercharging in the Atkinson cycle increases the rotational speed of the engine E and improves drivability.

### (Pressure-Boosting Mechanism)

The engine control mechanism of the present embodiment includes an electrical oil pump 14a as an example of an pressure-boosting mechanism 14 that boosts the hydraulic oil pressure for a VVT. As shown in Fig. 1, the electrical oil pump 14a is arranged in parallel with the mechanical oil pump 13 with respect to the intake-side VVT 4, the OSV 17, and the exhaust-side VVT 5. When the engine has shifted from the Atkinson cycle state to the transient operational state, the electrical oil pump 14a operates on the basis of an actuating signal from the ECU 6a.

In addition, although the hydraulic oil from the electrical oil pump 14a is supplied to all of the intake-side OCV 15, the exhaust-side OCV 16, and the OSV 17 in Fig. 1, the engine response immediately after the shifting to the transient operational state can be enhanced during an early stage if the hydraulic oil can be supplied to at least any one of the intake-side OCV 15 and the exhaust-side OCV 16.

In addition, an accumulator or the like may be used instead of the electrical oil pump 14a irrespective of the present embodiment. In short, any arbitrary configurations may be adopted as long as the hydraulic oil pressure can be boosted when the engine has shifted from the Atkinson cycle state to the transient operational state.

### (Control Flowchart)

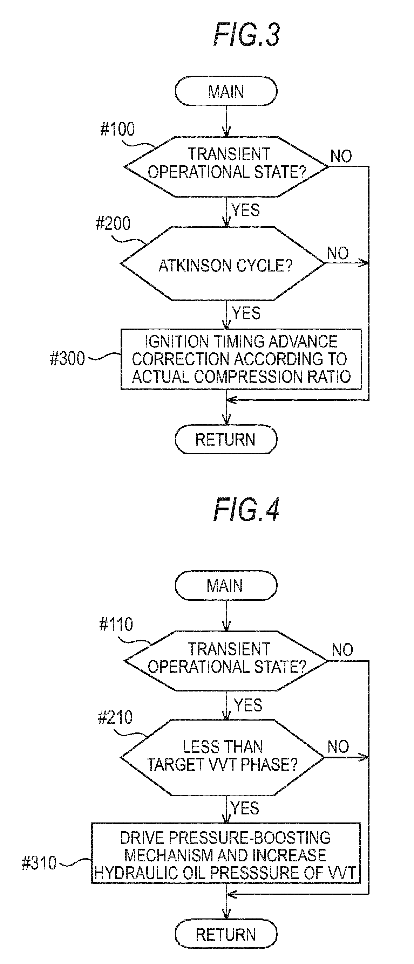

A flowchart of engine control in the present embodiment is shown in Figs. 3 to 5.

Fig. 3 is a control flowchart related to ignition timing advance correction.

If the ECU 6a determines that the engine has shifted to the transient operational state from the accelerator operation amount or the like of a driver (Step 100), it is next determined whether or not the engine is operating in the Atkinson cycle state (Step 200). Here, the control is ended when it is determined that the engine is not in the Atkinson cycle state. On the other hand, if it is determined that the engine is in the Atkinson cycle state, an ignition timing advance correction control is performed (Step 300). This correction control determines an ignition timing advance correction amount corresponding to an actual compression ratio from the control map 9 stored in advance in the ECU 6a according to the current phase of the intake-side VVT 4, and transmits an ignition signal, for which this advance amount is taken into consideration, to the ignition timing changing mechanism 8.

Fig. 4 is a control flowchart related to pressure-boosting correction of hydraulic oil pressure for a VVT. Here, an example in which this flow functions independently from the ignition timing advance correction is shown.

The ECU 6a determines that the engine has shifted to the transient operational state from the accelerator operation amount or the like of the driver (Step 110), and determines whether or not an actual VVT phase has reached a target VVT phase (Step 210). The control is ended when it is determined that the actual VVT phase has reached the target VVT phase. On the other hand, when it is determined that the actual VVT phase is less than the target VVT phase, the electrical oil pump 14a is driven, and the hydraulic oil pressure for a VVT is raised (Step 310).

Accordingly, the operating speed of the intake-side VVT 4 and the exhaust-side VVT 5 can be enhanced, and the engine output can be rapidly increased.

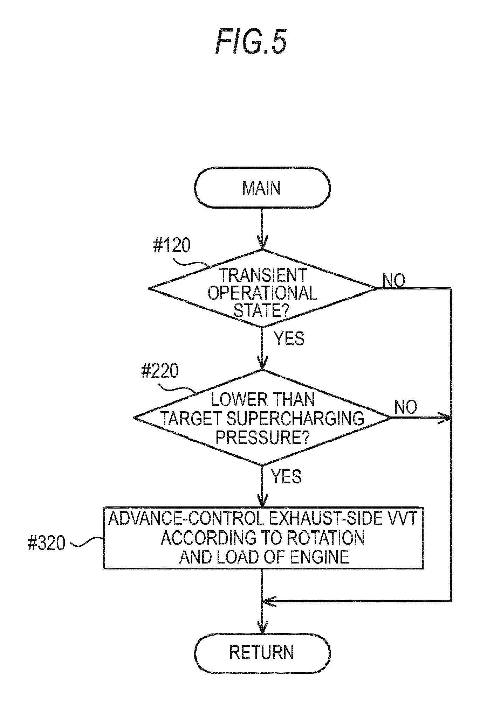

Fig. 5 is a control flowchart related to the advance correction of the exhaust-side VVT 5.

The ECU 6a determines that the operational state of the engine has shifted to the transient operational state (Step 120), and determines whether an actual supercharging pressure has reached a target supercharging pressure (Step 220). The control is ended when it is determined that the actual supercharging pressure has reached the target supercharging pressure, and the exhaust-side OCV 16 is driven so as to perform the advance control of the exhaust-side VVT 5 according to the rotation and load of the engine when it is determined that the actual supercharging pressure is lower than the target supercharging pressure (Step 320).

Accordingly, the combustion exhaust gas that is exhausted during an early stage is immediately supplied to the supercharger 3, the rotating speed of the supercharger 3 increases, and the amount of intake air to the cylinder 18 increases. As a result, the response, that is, drivability of the engine E improves.

### Example 1

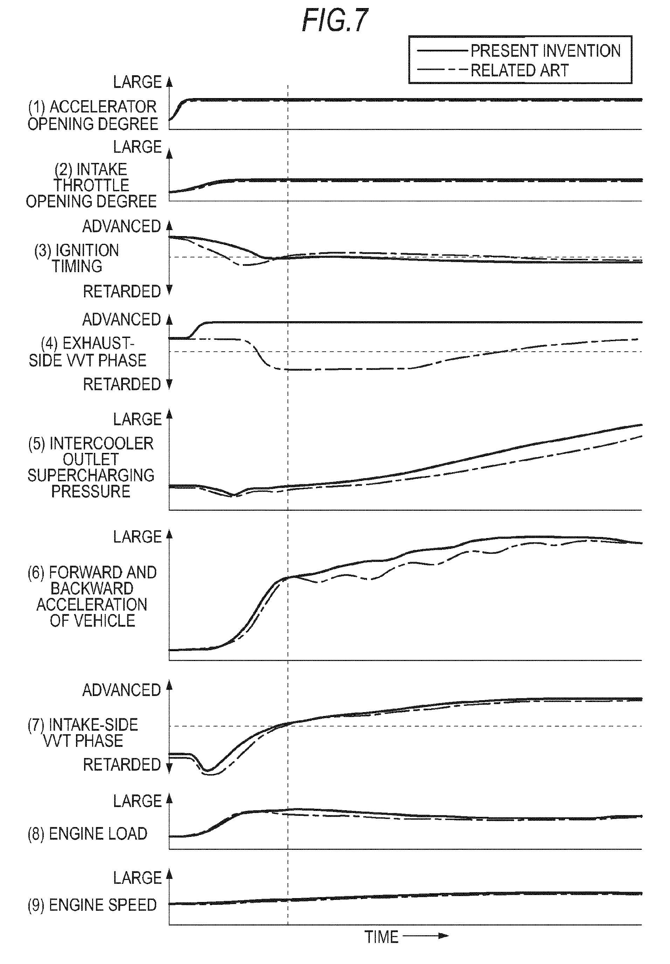

Fig. 7 is an explanatory view showing change aspects of respective parts when the operational state of the engine E is the transient operational state.

Fig. 7 shows (1) accelerator opening degree, (2) intake throttle opening degree, (3) ignition timing, (4) exhaust-side VVT phase, (5) intercooler outlet supercharging pressure, (6) forward and backward acceleration of vehicle, (7) intake-side VVT phase, (8) engine load, and (9) engine speed in order from the top row. In the drawings, solid lines show examples of the engine control related to the present embodiment, and one-dot chain lines show examples of control in an engine control in which operation in the related-art Atkinson cycle is possible.

Even if transition is made from the Atkinson cycle state to the high-output state of the engine, it is not assumed here that the accelerator is greatly stepped on. Instead, the engine control mechanism exhibits effects when overtaking acceleration is made with a partial opening degree from a low-load Atkinson operating range where practical fuel consumption is required. A state where the accelerator is stepped on by about a fraction of the operation stroke thereof, and is maintained as such is shown in (1) in Fig. 7.

As shown in (2) in Fig. 7, the opening degree of the intake throttle 7 increases slightly with the operation of the accelerator.

Since the actual compression ratio is low when the engine E is operated in the Atkinson cycle, knocking does not occur easily. For this reason, as shown in (3) in Fig. 7, when the opening operation of the accelerator is detected, the ignition timing is set to be slightly earlier than usual. Accordingly, the pressure when a combustion exhaust gas is ignited and exploded inside the cylinder 18 can be increased, and the output increase of the engine E can be promoted.

In this apparatus, the exhaust-side VVT 5 is advance-controlled simultaneously with the advance correction of the ignition timing. As shown in (4) in Fig. 7, the opening timing of the exhaust-side VVT 5 is advanced by a predetermined amount with the accelerator opening operation of a driver. As a result, the combustion exhaust gas inside the cylinder 18 is exhausted with an earlier timing, and the rotation start timing of the supercharger 3 is advanced.

Along with this, as shown in (5) in Fig. 7, the outlet supercharging pressure of the intercooler 23 rises while gradually increasing a difference compared with the example of the related art. Since the effects of the intercooler 23 interlock with an increase in the engine speed, the outlet supercharging pressure becomes larger as time passes after the accelerator opening operation.

The above effects appear markedly also in the forward and backward acceleration of the vehicle, as shown in (6) in Fig. 7. The rising of the forward and backward acceleration becomes equal to or more than an engine of the related art by virtue of the ignition advance correction, and the forward and backward acceleration also increases in accordance with a timing at which the supercharging pressure of the outlet of the intercooler 23 begins to become high.

(7) in Fig. 7 shows phase changes of intake-side VVT 4. When a driver has operated to open the accelerator, the electrical oil pump 14a is operated. Accordingly, It can be seen that, for example, the speed at which the intake-side VVT 4 changes from a retard phase to an advance phase becomes high. As a result, the response of the engine E becomes high.

In addition, the speed of the phase change of the exhaust-side VVT 5 also becomes high through the operation of the electrical oil pump. In (4) in Fig. 7, the phase of the exhaust-side VVT 5 changes to the advanced side immediately, and the pressure-boosting effect of the electrical oil pump is also exhibited here.

(8) in Fig. 7 shows changes in the engine load that are the results obtained by performing the above respective controls. The engine load is obtained from the value of the air flow sensor 22 or the like provided at the engine E. It can be seen that the load, that is, the output, of the engine increases slightly compared to the engine of the related art after the opening operation of the accelerator.

(9) in Fig. 7 shows the rotational speed of the engine E. The difference from the engine of the related art is seldom observed on this graph. That is, according to this apparatus, it can be understood that the engine torque increases compared to the engine of the related art and the drivability increases.

### Other Embodiment

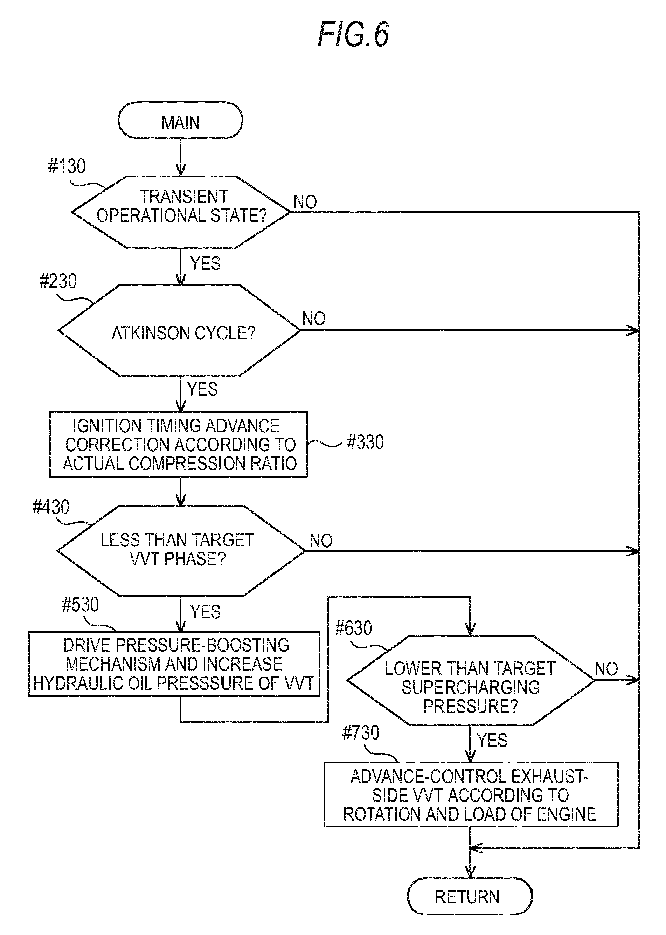

The ignition timing advance correction control, the pressure-boosting correction control of hydraulic oil pressure for a VVT, and the advance correction control of the exhaust-side VVT 5, which have been described in the above embodiment, can also constituted by one flowchart as shown in Fig. 6. For example, subsequent to transient operation determination (Step 130) and Atkinson cycle determination (Step 230) by the ECU 6a, ignition timing advance correction (Step 330) and determination on whether or not the actual VVT phase has reached the target VVT phase (Step 430); pressure-boosting correction of the hydraulic oil pressure for a VVT (Step 530) and determination on whether the actual supercharging pressure has reached the target supercharging pressure (Step 630) when the actual VVT phase is less than the target VVT phase; and the advance correction (Step 730) of exhaust-side VVT 5 when the actual supercharging pressure is lower than the target supercharging pressure are performed.

The change from the Atkinson cycle state to the high-output state is first made from the advance correction of an ignition timing at which the realization of a control operation is the earliest. Accordingly, the output of the engine E can be raised during an early stage. Along with this, the electrical oil pump 14a or the like that is the pressure-boosting mechanism 14 is driven to raise the hydraulic oil pressure to a VVT. The operating speed of the VVT is increased by increasing the pressure of the hydraulic oil that is present in the hydraulic oil passage from the intake-side OCV 15 or the exhaust-side OCV 16 to the corresponding VVTs, respectively, and high-speed rotation of the engine E is realized during an early stage. Moreover, the energy of the combustion exhaust gas that rotates the exhaust turbine 3a of the supercharger 3 increases with the increase in the engine speed.

The increase in the rotational speed of the supercharger 3 is the effect appearing last among the effects of the above three kinds of processing. Hence, when the apparatus is configured so as to perform the respective processings in series according to a time series, it is preferable to perform the processings according to the above sequence.

It should be noted that these three processings can be independently executed, respectively. Hence, even when these processings are serially performed in a time series, execution sequences of these respective processings can be arbitrarily changed.

The engine control mechanism of the present embodiment is widely applicable to, for example, an engine that is driven with gasoline, is able to independently change the ignition timing and the intake/exhaust timing with respect to the operation process of the piston, and is equipped with the supercharger that increases the amount of intake air to the combustion chamber.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. An engine control mechanism including an intake valve (11) that opens and closes a combustion chamber (2) of an engine (E) to be driven with gasoline so that gasoline and air flow into the combustion chamber, and an exhaust valve (10) that opens and closes the combustion chamber so that a combustion exhaust gas flows out of the combustion chamber, the engine control mechanism comprising:
an intake-side VVT (4) that includes a first driving-side rotary body (41) and a first driven-side rotary body (42), and is capable of setting a valve opening/closing timing of the intake valve such that a relative phase of the first driven-side rotary body with respect to the first driving-side rotary body is set to an intermediate lock phase between a most advanced phase and a most retarded phase at the time of starting of the engine, and the relative phase is set to a more retarded side than the intermediate lock phase after the starting of the engine;
an exhaust-side VVT (5) that includes a second driving-side rotary body (51) and a second driven-side rotary body (52), and sets a valve opening/closing timing of the exhaust valve such that a relative phase of the second driven-side rotary body with respect to the second driving-side rotary body is set to any phase between the most advanced phase and the most retarded phase;
a control unit (6) that advance-controls the ignition timing of the engine when an operational state of the engine has shifted from an Atkinson cycle state where the phase of the intake-side VVT is closer to the retarded side than the intermediate lock phase to a transient operational state where the output of the engine is increased; and
an ignition timing changing mechanism (8) in which the driving is controlled by the control unit.

2. The engine control mechanism according to Claim 1,
wherein the driving of the ignition timing changing mechanism is controlled by the control unit on the basis of a control map showing the correlation between the degree of the Atkinson cycle state and the advance amount of the ignition timing.

3. The engine control mechanism according to Claim 1 or 2,
wherein the engine includes a supercharger (3) that increases the amount of intake air using a combustion exhaust gas, and
wherein the relative phase of the exhaust-side VVT is advance-controlled when the operational state of the engine has shifted to the transient operational state.

4. The engine control mechanism according to any one of Claims 1 to 3, further comprising:
a pressure-boosting mechanism (14) that increases the hydraulic oil pressure of at least one of the intake-side VVT and the exhaust-side VVT in the transient operational state.
